# EUROPÄISCHE PATENTANMELDUNG

(11) **EP 4 772 015 A1**
(43) Veröffentlichungstag der Anmeldung: **08.07.2026**
(21) Anmeldenummer: 25220700.6
(22) Anmeldetag: 04.12.2025
(51) Int. Cl.: A01D 21/00, A01D 17/00

(54) **HACKFRUCHTERNTEMASCHINE**

(30) Priorität: 07.01.2025 DE 102025100298
(71) Anmelder: Kiefner, Christian, 93092 Barbing (DE)
(72) Erfinder: Kiefner, Christian, 93092 Barbing (DE)
(74) Vertreter: Glück Kritzenberger Patentanwälte PartGmbB

(57) **Zusammenfassung**

Die Erfindung betrifft eine Hackfruchterntemaschine (5), welche mehrere in Fahrtrichtung der Hackfruchterntemaschine (5) laufende senkrechte Sechscheiben (20) aufweist, die zum Einschneiden in den Boden ausgebildet sind, wobei mindestens eine der Sechscheiben (20) drehbar an wenigstens einer Schwinge (16) aufgenommen ist, die schwenkbar an einem Rahmen (12) der Hackfruchterntemaschine (5) gelagert ist, und wobei die Schwinge (16) über ein Federelement (22) an dem Rahmen (12) abgestützt ist. Erfindungsgemäß ist das Federelement durch einen Druckmittelzylinder (22) gebildet, dessen Druckmittel mit einem Druckspeicher (28) in Verbindung steht. Auf diese Weise lässt sich ein vergleichsweise konstanter Anpressdruck der Scheibensechen (20) auf den Boden unabhängig vom Federweg realisieren.

## Beschreibung

Die vorliegende Erfindung betrifft eine traktorbetriebene oder selbstfahrende, beziehungsweise motorisierte Erntemaschine zur Ernte von Hackfrüchten, vorzugsweise Kartoffeln. Derartige Hackfruchterntemaschinen haben mehrere senkrecht angeordnete und in den Boden einschneidende Sechscheiben zur Abtrennung von seitlich über eine Aufnahmeeinrichtung der Erntemaschine überständigem Kraut vor der Aufnahme in die Aufnahmeeinrichtung. Derartige Hackfruchterntemaschinen können sowohl aktiv angetriebene Sechscheiben als auch Sechscheiben aufweisen, deren Rotation durch die Friktion mit dem Boden erzeugt wird. Wenigstens eine der Sechscheiben, vorzugsweise alle Sechscheiben, sind drehbar an Schwingen aufgenommen, die üblicherweise beidseitig der Aufnahmeeinrichtung der Hackfruchterntemaschine angeordnet sind. Die Schwingen sind schwenkbar an einem Rahmen der Erntemaschine gelagert und sind über ein Federelement an dem Rahmen abgestützt. Üblicherweise sind diese Federelemente in Form von Schraubenfedern mit einem begrenzten Federweg ausgebildet, welche die Schwinge am Rahmen abstützen und die Schwinge und damit die Sechscheibe auf den Boden hin nach unten vorspannen. Aufgrund des begrenzten Federweges muss die Tiefe der Scheibensechen durch eine Spindel in der Tiefe voreingestellt werden. Eine Schraubenfeder hat einen proportionalen und aufgrund des kurzen Federweges im Verhältnis zum erforderlichen Federweg einen steilen Kraftverlauf, so dass insbesondere bei unebenen Ackerböden, wie sie bei Hackfruchtdämmen vorkommen, hohe Kräfte auftreten können, wenn die Sechscheiben an höhergelegenen Ackerstellen oder bei Steinbesatz nach oben gedrückt werden und damit unter hohem Kraftaufwand stärker einfedern. Dies belastet die gesamte Mechanik und beeinträchtigt die Tiefenführung der Aufnahme. Es verringert die Effektivität und die Produktschonung der Erntemaschine.

Es ist daher Aufgabe der vorliegenden Erfindung, eine Hackfruchterntemaschine zu schaffen, die eine effektivere Funktion der Sechscheiben ermöglicht. Diese Aufgabe wird gelöst durch eine Hackfruchterntemaschine mit den Merkmalen des Anspruchs 1. Vorteilhafte Weiterbildungen der Erfindung sind Gegenstand der zugeordneten abhängigen Ansprüche. Vorteilhafte Weiterbildungen der Erfindung sind ebenfalls in der Beschreibung und in der Zeichnung beschrieben.

Erfindungsgemäß ist das Federelement, welches die Schwinge an dem Rahmen abstützt und die Sechscheibe nach unten drückt, durch einen Druckmittelzylinder gebildet, dessen Druckmittel mit einem Druckspeicher in Verbindung steht. Der Druckspeicher ist ein in dem Druckmittelzylinder nicht integrierter externer Druckspeicher, der vorzugsweise über eine Druckmittelleitung mit dem Druckmittelzylinder verbunden ist. Das heißt, der Druckspeicher ist außerhalb der Druckkammern des wenigstens einen Druckmittelzylinders angeordnet. So ist es z.B. möglich, mehrere Druckmittelzylinder mit einem Druckspeicher zu betreiben. Zudem kann das Volumen des Druckspeichers sehr viel größer gewählt werden, als es bei einem in dem Druckmittelzylinder integrierten Speicher möglich wäre. Durch die Verbindung des Druckmittelzylinders mit dem Druckspeicher ist es möglich, dass der Druckmittelzylinder beim Einfedern das Druckmittel in den Druckspeicher strömt, der vorzugsweise deutlich größer als das Arbeitsvolumen des Druckmittelzylinders ist, wodurch, entsprechend der Größe und der Ausbildung des Druckspeichers, ein sehr flacher Kraftverlauf im Arbeitsweg des Druckmittelzylinders erzielt wird, welcher zudem annähernd linear ist.

Dies hat zur Folge, dass beim tieferen Einfedern der Sechscheibe die durch die Sechscheibenanordnung ausgeübte Vorspannkraft in den Boden kaum ansteigt, wodurch die Sechscheibe nicht zu tief in den Boden einschneidet und wodurch die gesamte Mechanik der Sechscheiben und deren Lagerung am Rahmen der Erntemaschine geschont wird. Vor allem bei aktiv angetriebenen Sechscheiben wird hierdurch auch eine Überlastung des Rotationsantriebs der Sechscheiben vermieden. Diese Vermeidung von Kraftspitzen beim Einfedern der Schwinge führt auch dazu, dass die Vortriebskraft der Hackfruchterntemaschine, unabhängig davon, ob sie traktorbetrieben ist oder einen eigenen Antrieb aufweist, geringer ist, so dass der Gesamtbetrieb der Hackfruchterntemaschine effektiver wird.

Außerdem hat dies zur Folge, dass die gegen den Ackerboden wirkende Kraft auf die Sechscheiben über den gesamten Federweg der einzelnen Sechscheiben, der auch nicht mehr durch eine Spindel in der Arbeitstiefe voreingestellt werden muss, annähernd konstant bleibt. Die Sechscheiben werden stets und unabhängig vom Höhenniveau des Ackerbodens mit der gewünschten Kraft, die durch den Druck im Druckspeicher eingestellt ist, gegen den Boden gedrückt. Die Erfindung realisiert damit eine automatische Tiefeneinstellung der Sechscheiben.

Bei Sechscheiben, die durch Friktion angetrieben werden, gewährleistet dies auch unter schwierigen Rahmenbedingungen einen zuverlässigen Antrieb und dadurch einen sicheren Gutstrom. Es versteht sich, dass hierfür die Sechscheiben motorisch antreibbar ausgebildet sind, es sich also um aktiv angetriebene Sechscheiben handelt. Darüber hinaus wird ein sicheres Abtrennen des überstehenden Krauts der Hackfrüchte unter allen Bodenbedingungnen sichergestellt, was Voraussetzung für einen effektiven Rodebetrieb ist.

Gleichmäßige Kraft auf die Sechscheiben gewährleistet außerdem, dass keine der Scheibensechen bei starkem Einfedern die Aufnahmeeinrichtung in der Tiefenführung negativ beeinflussen kann, was eine konstante Rodetiefe sicherstellt. Dementsprechend können Beschädigungen des Ernteguts durch ein vorrübergehend zu flach arbeitendes Rodeschar ausgeschlossen werden.

Vorzugsweise ist der Druckmittelzylinder ein Hydraulikzylinder und der Druckspeicher ein Membran- oder Blasenspeicher. Der flache Kraftverlauf in Abhängigkeit von einem Einfederweg des Hydraulikzylinders lässt sich dadurch realisieren, dass der Druckspeicher ein Membran- oder Blasenspeicher ist. Bei einem Membran- oder Blasenspeicher drückt ein Hydraulikmedium getrennt durch eine Membran oder Blase gegen ein Gasvolumen, wodurch bei einem Einfließen des Hydraulikmediums in den Membranspeicher diese Membran oder Blase nachgibt und damit ein Einfedern des Hydraulikzylinders erlaubt, ohne dass die Kraft zu sehr ansteigt. Um einen möglichst flachen und nahezu linearen Kraftverlauf zu erreichen, ist es vorteilhaft, wenn ein Gasvolumen in dem Membran- oder Blasenspeicher deutlich größer als ein Arbeitsvolumen des Druckmittelzylinders ist. Als Hydraulikmedium eignet sich insbesondere Öl, da unter den rauen Einsatzbedingungen einer Hackfruchterntemaschine alle mechanischen Teile einer enormen mechanischen Belastung ausgesetzt sind. Durch die Verwendung von Öl als Hydraulikmedium wird somit die Lebensdauer und auch die Betriebszuverlässigkeit der Hackfruchterntemaschine deutlich erhöht.

In einer vorteilhaften Weiterbildung der Erfindung ist die Schwinge mittels eines Schwenklagers an dem Rahmen der Hackfruchterntemaschine schwenkbar gelagert und der Druckmittelzylinder ist in dem Bereich zwischen dem Schwenklager und dem Rotationslager der Sechscheibe oder im Bereich der Achsbefestigung der Sechscheibe an der Schwinge angelenkt. Auf diese Weise kann der Betätigungsweg der Sechscheibe relativ zum Betätigungsweg des Druckmittelzylinders größer sein, wohingegen im Falle einer Anlenkung des Druckmittelzylinders im Bereich der Achsbefestigung erreicht wird, dass die auf den Druckmittelzylinder wirkende Kraft nicht durch das Hebelverhältnis Schwenklager-Rotationslager zu Schwenklager-Anlenkung des Druckmittelzylinders erhöht wird.

Oben wurde bereits ausgeführt, dass der Druckmittelspeicher größer als der Druckmittelzylinder sein sollte, insbesondere also der Druckmittelspeicher ein Volumen für das Druckmittel aufweist, das größer ausgebildet ist, als ein Arbeitsvolumen des Druckmittelzylinders, um einen flachen Kraftverlauf in Abhängigkeit vom Federweg des Druckmittelzylinders zu erzielen. Dies wird insbesondere erzielt, wenn der Druckmittelspeicher, insbesondere dessen Volumen für das Druckmittel, zwei- bis zehnmal so groß wie das Arbeitsvolumen des Druckmittelzylinders ist, insbesondere sieben bis zehn mal so groß, wie das Volumen der Druckmittelzylinder ist. In diesem Fall ist in dem Druckmittelspeicher viel Platz für die Aufnahme des beim Einfedern der Druckmittelzylinder einströmenden Druckmediums. Zudem lässt sich der Druck im Druckspeicher, insbesondere bei einem Membran- oder Blasenspeicher über den Gasdruck genau einstellen.

Jedoch kann es von Vorteil sein den Druckspeicher noch größer auszuführen, um die Funktion bei erhöhtem Betriebsdruck sicherzustellen.

Die Zylinder können erst nachgeben, sobald die auf die Druckmittelzylinder wirkende Kraft mehr Druck erzeugt, als im Druckspeicher voreingestellt ist. Dementsprechend ist der fest voreingestellte Druck im Druckspeicher so einzustellen, dass ab der niedrigsten gewünschten Auslösekraft Druckmittel in den Druckspeicher aufgenommen wird.

Möchte der Anwender die Auslösekraft vergrößern, kann dies erfolgen, indem weiteres Druckmittel von der Druckmittelquelle in das System gepumpt wird. Der Druck steigt und somit auch die Auslösekraft. Allerdings reduziert dies dauerhaft das für das aus den Druckmittelzylindern stammende Druckmittel, da das zusätzlich in das System gepumpte Druckmittel Volumen des Druckspeichers beansprucht. Das wirkt sich nachteilhaft auf den Druckverlauf im Arbeitsbereich aus. Durch die weitere Vergrößerung des Druckmittelspeichers kann dem entgegengewirkt werden. Hierdurch ist vorteilhafterweise ein größerer einstellbarer Druckbereich durch den Anwender möglich, ohne die Funktion der gleichmäßig einfedernden Druckmittelzylinder nennenswert zu beeinträchtigen.

Vorzugsweise läuft die Schwinge in Fahrtrichtung der Hackfruchterntemaschine nach, so dass die Schwinge immer auch bei groben Unebenheiten des Ackers nachfedern kann, ohne den Vortrieb derHackfruchterntemaschine zu behindern.

Besonders vorteilhaft ist die Erfindung bei Kartoffelerntemaschinen, bei denen eine große Menge an Kraut vor der Aufnahme der Kartoffeln mittels der Aufnahmeeinrichtung abzutrennen ist.

In einer vorteilhaften Weiterbildung der Erfindung sind die mehreren Druckmittelzylinder mit einem gemeinsamen Druckspeicher verbunden, was den Vorteil hat, dass nicht für jeden Druckmittelzylinder ein separater Druckspeicher vorgesehen sein muss. Auf diese Weise lässt sich die gesamte Federeinrichtung für die Schwingen der Sechscheiben kompakter gestalten und der Kraft-Weg-Verlauf ist bei allen Sechscheiben gleich. Diese Ausführungsform ermöglicht auch, dass an irgendeiner geeigneten Stelle an der Hackfruchterntemaschine außerhalb des Bereichs der Ernteorgane ein großer Druckmittelspeicher angeordnet werden kann, der dafür Sorge trägt, dass bei allen Sechscheiben ein identischer flacher und nahezu linearer Kraftverlauf in Abhängigkeit vom Federweg erzielt wird.

Wie oben bereits ausgeführt, hat die Hackfruchterntemaschine entweder einen eigenen Antrieb oder ist für den Zugbetrieb in Verbindung mit einer Zugmaschine, insbesondere einem Traktor, ausgebildet.

In einer vorteilhaften Weiterbildung der Erfindung ist der Druckmittelzylinder als einfachwirkender Zylinder ausgebildet, welcher konstruktiv simpler ist. Selbstverständlich können jedoch auch doppelwirkende Druckmittelzylinder eingesetzt werden.

Die Verwendung eines zentralen Druckspeichers hat zudem den Vorteil, dass die Federkraft an den Schwingen beidseitig der Aufnahmeeinrichtung und eventuell entsprechend der Breite der Aufnahmeeinrichtung auch in der Mitte der Aufnahmeeinrichtung immer mit der gleichen Kraft beaufschlagt sind. Auf diese Weise ist die Vorspannkraft aller Sechscheiben unabhängig von ihrer Lage relativ zur Aufnahmeeinrichtung identisch, was bei mehrreihigen Aufnahmeeinrichtungen zur gleichmäßigen Tiefenführung beiträgt. Selbstverständlich können jedoch auch mehrere kleine Druckspeicher vorgesehen sein, die entweder separat oder miteinander verbunden sind, um eine geeignete Gesamtkapazität des Druckspeichers zu erzielen.

Wie oben bereits ausgeführt wurde, hat die Hackfruchterntemaschine grundsätzlich eine Aufnahmeeinrichtung für die Hackfrüchte, in der Regel auch verbunden mit einer Rodeschar und einem Siebkanal. Die Sechscheiben beziehungsweise die Schwingen zur Anordnung der Sechscheiben sind beidseitig der Aufnahmeeinrichtung angeordnet, um beidseitig der Aufnahmeeinrichtung das Kraut der Hackfrüchte abzutrennen. Wenn es sich um eine mehrreihige Aufnahmeeinrichtung handelt, bei der zwei Hackfruchtreihen gleichzeitig abgeerntet werden können, sind Schwingen natürlich auch optional in jedem Bereich zwischen den Hackfruchtreihen angeordnet, um auf diese Weise beidseitig überständiges Kraut jeder Hackfruchtreihe im Acker zuverlässig abzutrennen.

Folgende Ausdrücke werden synonym verwendet: Sechscheiben - Scheibensechen; Druckmittel- Druckmedium - Hydrauliköl;

Die Erfindung wird nachfolgend beispielsweise anhand der schematischen Zeichnung beschrieben. In dieser zeigen:
- Fig. 1: eine schematische Seitenansicht einer Sechscheibenanordnung einer Hackfruchterntemaschine,
- Fig. 2: die Sechscheibenanordnung aus Fig. 1 im Betrieb und im Zusammenwirken mit einem Rodeschar und dem Siebband einer Aufnahmeeinrichtung der Hackfruchterntemaschine,
- Fig. 3: eine Schemazeichnung einer Hydraulikanordnung mit einem zentralen Druckspeicher in Verbindung mit den Druckmittelzylindern, und
- Fig. 4: ein Kraft-Weg-Diagramm zum Vergleich des Kraft-Weg-Verlaufs einer konventionellen Schraubenfeder im Vergleich zu dem Kraft-Weg-Verlauf eines Druckspeicherunterstützten Druckmittelzylinders gemäß der vorliegenden Erfindung.

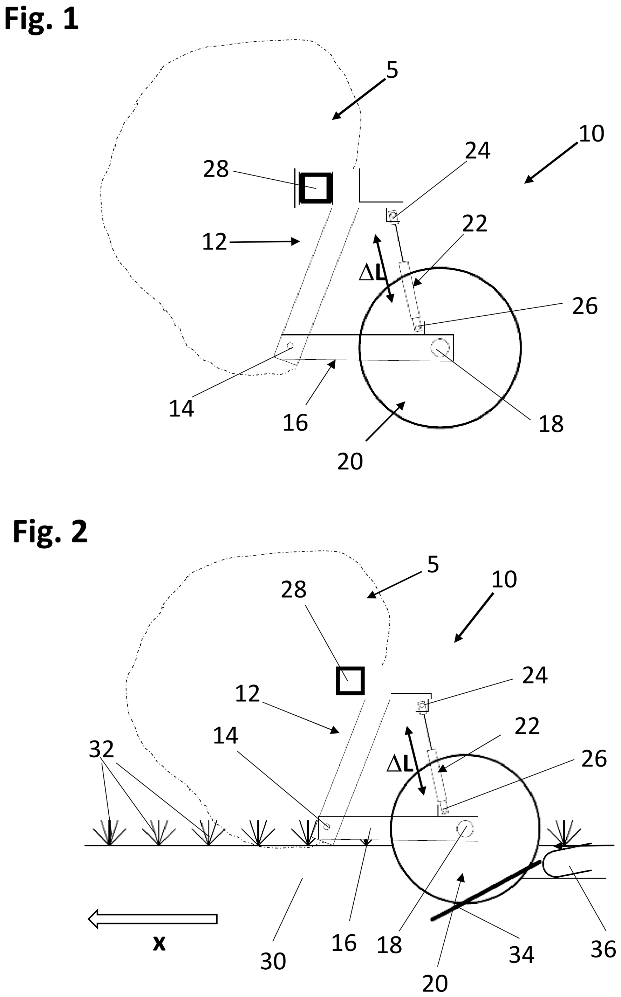

Fig. 1 zeigt eine Sechscheibenanordnung 10 einer Hackfruchterntemaschine 5, von der aus Gründen der Übersichtlichkeit nur ein Ausschnitt eines Rahmens 12 hier abgebildet ist. An dem Rahmen 12 ist mittels eines Schwenklagers 14 eine Schwinge 16 schwenkbar gelagert. An dem freien Ende der Schwinge 16 ist ein Rotationslager 18 für eine Sechscheibe 20 angeordnet, wobei die Sechscheibe 20 entweder durch die Friktion mit dem Ackerboden rotiert oder durch einen nicht dargestellten eigenen Rotationsantrieb.

Die Schwinge 16 ist über einen Druckmittelzylinder 22 federnd an dem Rahmen 12 abgestützt, wobei der Federweg mit dem Buchstaben ΔL gekennzeichnet ist. Hierfür ist der Druckmittelzylinder 22 mittels eines ersten Anlenkungspunktes 24 an dem Rahmen 12 und mittels eines zweiten Anlenkungspunktes 26 an der Schwinge 16 befestigt. Der zweite Anlenkungspunkt 26 ist hierbei deutlich näher an dem Rotationslager 18 der Sechscheibe 20 angeordnet als an dem Schwenklager 14 der Schwinge 16 an dem Rahmen 12. Auf diese Weise wird erreicht, dass die Auslenkungskraft der Sechscheibe 20 in Richtung des Federwegs ΔL nicht zu groß wird. An dem Rahmen 12 ist ein Druckspeicher 28 angeordnet, der in nicht dargestellter Weise mit dem Druckmittelzylinder 22 verbunden ist, so dass das im Druckmittelzylinder 22 befindliche Druckmittel, insbesondere Hydrauliköl, in den Druckspeicher 28, eintreten kann und vice versa. Der Druckspeicher 28 ist hierbei vorzugsweise als Blasenspeicher oder Membranspeicher ausgebildet. Durch diese Anordnung wird erreicht, dass die Kraftkurve der Sechscheibe 20 in Abhängigkeit von ihrer Auslenkung vergleichsweise flach verläuft. Bei einem vollen Einfedern der Sechscheibe 20 wirkt somit nicht sehr viel mehr Kraft als bei einem leichten Einfedern. Dies hat zur Folge, dass zum einen die Einschnitttiefe der Sechscheibe 20 in den Boden weitgehend konstant ist und damit ein effektives und kräfteschonendes Abtrennen des Krautes der Hackfrüchte realisiert werden kann.

Fig. 2 zeigt den Einsatz der Sechscheibenanordnung 10 aus Fig. 1 im Betrieb. In den Figuren sind funktionsgleiche oder identische Komponenten mit den identischen Bezugszeichen versehen. Fig. 2 zeigt den Betrieb der Hackfruchterntemaschine 5 in Fahrtrichtung x, wobei die Schwinge 16 in Fahrtrichtung nachläuft, wodurch sie nicht in der Lage ist, in Abhängigkeit von ihrem Federzustand in Verbindung mit Bodenunebenheiten eines Kartoffeldamms 30 eines Ackers die Fahrt der Hackfruchterntemaschine 5 zu behindern. Fig. 2 zeigt die zu erntenden Hackfrüchte 32, deren Kraut durch die Sechscheibe 20 abgetrennt werden soll. Zum Ernten der Hackfrüchte selbst hat die Hackfruchterntemaschine 5 als Aufnahmeeinrichtung ein Rodeschar 34, der in Verbindung mit einem Siebband 36 die geernteten Hackfrüchte in einen Aufnahmeraum der Hackfruchterntemaschine überführt. Von dem Acker ist in Fig. 2 der Kartoffeldamm 30 mit den darin angepflanzten Kartoffelpflanzen 32 abgebildet. Das Rodeschar 34 ist in Art eines Rechens ausgebildet und überführt die in dem Kartoffeldamm 30 angeordneten Kartoffelknollen auf das Siebband 36.

Das Kraut der Kartoffelpflanzen 32 wird dabei durch Sechscheiben 20 beidseitig des Kartoffeldamms 30 abgetrennt. Es sind somit jeweils eine Schwinge 16 mit einer Sechscheibe 20 beidseitig eines Kartoffeldammes 30 angeordnet. Wie oben ausgeführt, wird durch die flache Kraft-Weg-Kurve des Druckmittelzylinders 22 der Sechscheibenanordnung 10 eine von der Bodenart abhängige Eindringtiefe der Sechscheibe 20 in den Boden und damit eine effiziente und kraftspitzenvermeidende Arbeitsweise der Hackfruchterntemaschine 5 gewährleistet.

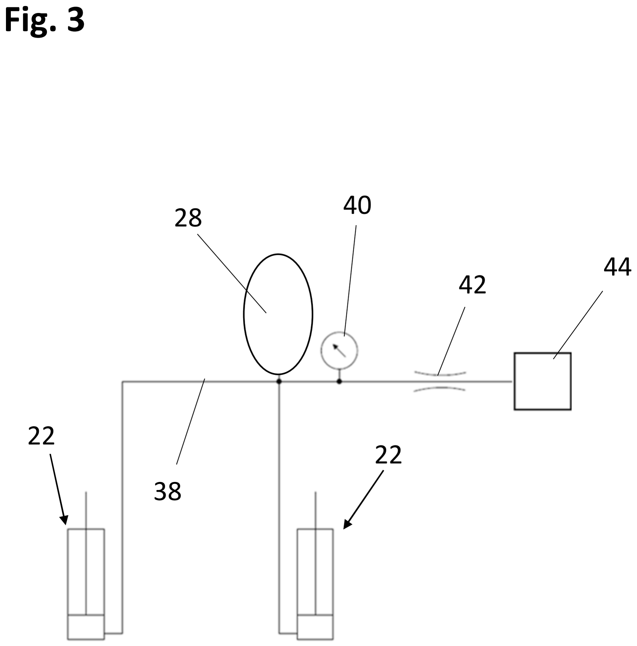

Fig. 3 zeigt in sehr schematischer Weise das Zusammenwirken der Hydraulikkomponenten der Hackfruchterntemaschine 5 aus den Fig. 1 und 2. Die Druckmittelzylinder 22 an jeder Schwinge 16 sind demzufolge über Druckmittelleitungen 38 mit dem Druckspeicher 28 verbunden, der vorzugsweise als Blasenspeicher oder Membranspeicher ausgebildet ist und damit in der Lage ist, das Hydrauliköl von den Druckmittelzylindern 22 aufzunehmen. In Verbindung mit der Druckmittelleitung 38 ist ein Druckmanometer 40 angeordnet, so dass man den in der Druckmittelleitung 38 und damit den in den Druckmittelzylindern 22 vorliegenden Betriebsdruck des Hydrauliköls erfassen kann. Ein derartiges Manometer 40 kann selbstverständlich auch eine elektronische Druckerfassungseinrichtung sein, die in Verbindung mit einer zentralen Hydrauliksteuerung arbeitet. Die Hydraulikleitung 38 ist des Weiteren über ein Drosselventil 42 mit einer gesteuerten Hydraulikquelle 44 verbunden, die insbesondere über eine zentrale Hydrauliksteuerung überwacht und gesteuert wird. Durch diese Anordnung ist es möglich, den Vorspanndruck gefühlvoll durch die gesteuerte Druckmittelquelle einzustellen. Das Druckmittel in den Zylindern kann jederzeit ohne Widerstand mit dem Druckspeicher 28 interagieren.

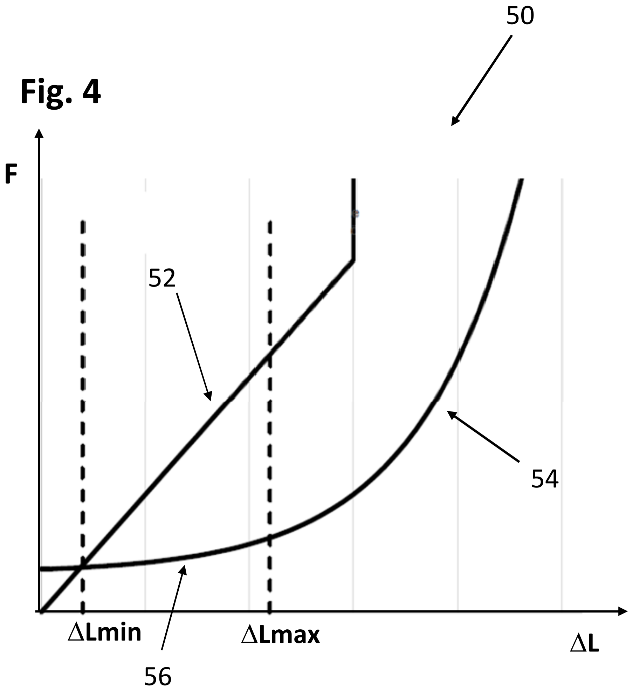

Fig. 4 zeigt ein Weg-Kraft-Diagramm, wobei der Federweg der Druckmittelzylinder 22 mit ΔL und die zugehörige Auslenkkraft mit F bezeichnet ist. In dem Diagramm 50 ist der Endanschlag des Hydraulikzylinders 22 im komplett ausgefederten Zustand mit Lmin bezeichnet und der maximal zugelassene Einfederbereich mit Lmax. Die Kurve 52 zeigt das Kraft-Feder-Verhalten einer herkömmlichen Schraubenfeder, die linear in Abhängigkeit von der Einfederung sehr stark ansteigt. Die Kurve 54 zeigt die erfindungsgemäße Kombination von Druckmittelzylinder 22 und Druckspeicher 28, wobei aufgrund der Größe des Druckspeichers 28 der Druckverlauf 56 im Arbeitsbereich des Druckmittelzylinders 22 zwischen totalem Ausfedern Lmin und totalem Einfedern Lmax sehr flach gehalten werden kann. Dies hat zur Folge, dass sich die Auslenkungskraft der Sechscheibe in Abhängigkeit von ihrem Einfederungsweg kaum ändert, was einen sehr viel verschleißfreieren und widerstandsärmeren Betrieb ermöglicht.

Die Erfindung ist nicht auf die beschriebenen Ausführungsbeispiele beschränkt, sondern kann innerhalb des Schutzbereichs der beiliegenden Ansprüche variiert werden.

### Bezugszeichenliste:

- 5: Hackfruchterntemaschine
- 10: Sechscheibenanordnung
- 12: Rahmen der Hackfruchterntemaschine
- 14: Schwenklager am Rahmen für eine Schwinge zur Aufnahme der Sechscheiben
- 16: Schwinge zur Aufnahme einer Sechscheibe
- 18: Rotationslager an der Schwinge für die drehbare Lagerung der Sechscheibe
- 20: Sechscheibe
- 22: Druckmittelzylinder zur Abstützung der Schwinge am Rahmen
- 24: erster Anlenkungspunkt des Druckmittelzylinders am Rahmen
- 26: zweiter Anlenkungspunkt des Druckmittelzylinders an der Schwinge
- 28: am Rahmen angeordneter Druckspeicher für die Druckmittelzylinder
- 30: Kartoffeldamm auf einem Acker
- 32: Kartoffelpflanzen
- 34: Rodeschar an der Hackfruchterntemaschine
- 36: Siebband am Aufnahmebereich der Hackfruchterntemaschine
- 38: Hydraulikleitung
- 40: Manometer
- 42: Drosselventil
- 44: gesteuerte Hydraulikquelle
- 50: Kraft-Weg Diagramm der Auslenkungskraft der Sechscheibe in Abhängigkeit vom Auslenkungsweg
- 52: Kraft-Weg Kurve des Federverhaltens einer konventionellen Schraubenfeder
- 54: Kraft-Weg Kurve der erfindungsgemäßen Kombination von Druckmittelzylinder mit Druckspeicher
- 56: In der Kraft-Weg Kurve des Druckmittelzylinders annähernd linearer flacher Bereich zwischen minimaler und maximaler Einfederung
- ΔL: Einfederweg bzw. Auslenkung des Federelements
- x: Fahrtrichtung

## Patentansprüche

1. Hackfruchterntemaschine (5), welche mehrere in Fahrtrichtung der Hackfruchterntemaschine (5) laufende senkrechte Sechscheiben (20) aufweist, die zum Einschneiden in den Boden ausgebildet sind, wobei mindestens eine der Sechscheiben (20) drehbar an wenigstens einer Schwinge (16) aufgenommen ist, die schwenkbar an einem Rahmen (12) der Hackfruchterntemaschine (5) gelagert ist, und wobei die Schwinge (16) über ein Federelement (22) an dem Rahmen (12) abgestützt ist,
**dadurch gekennzeichnet, dass** das Federelement durch einen Druckmittelzylinder (22) gebildet ist, dessen Druckmittel mit einem Druckspeicher (28) in Verbindung steht.

2. Hackfruchterntemaschine (5) nach Anspruch 1, **dadurch gekennzeichnet, dass** der Druckmittelzylinder (22) ein Hydraulikzylinder ist, und dass der Druckspeicher (28) ein Membran- oder Blasenspeicher ist.

3. Hackfruchterntemaschine (5) nach einem der vorhergehenden Ansprüche, **dadurch gekennzeichnet, dass** die Schwinge (16) mittels eines Schwenklagers (14) an dem Rahmen (12) schwenkbar gelagert ist, und dass der Druckmittelzylinder (22) in dem Bereich zwischen dem Schwenklager (14) und dem Rotationslager (18) oder im Bereich des Rotationslagers der Sechscheibe (20) an der Schwinge (16) angelenkt ist.

4. Hackfruchterntemaschine (5) nach einem der vorhergehenden Ansprüche, **dadurch gekennzeichnet, dass** die Schwinge (16) in Fahrtrichtung nachläuft.

5. Hackfruchterntemaschine (5) nach einem der vorhergehenden Ansprüche, **dadurch gekennzeichnet, dass** sie als Kartoffelerntemaschine (5) ausgebildet ist.

6. Hackfruchterntemaschine (5) nach einem der vorhergehenden Ansprüche, **dadurch gekennzeichnet, dass** mehrere Druckmittelzylinder (22) mit einem gemeinsamen Druckspeicher (28) verbunden sind.

7. Hackfruchterntemaschine (5) nach einem der vorhergehenden Ansprüche, **dadurch gekennzeichnet, dass** der Druckspeicher (28) größer als ein Arbeitsvolumen des Druckmittelzylinders (22) ist.

8. Hackfruchterntemaschine (5) nach Anspruch 7, **dadurch gekennzeichnet, dass** der Druckspeicher (28) zwei- bis zehnmal so groß wie das Arbeitsvolumen des Druckmittelzylinders (22) ist.

9. Hackfruchterntemaschine (5) nach einem der vorhergehenden Ansprüche, **dadurch gekennzeichnet, dass** sie einen eigenen Antrieb aufweist oder für den Zugbetrieb ausgebildet ist.

10. Hackfruchterntemaschine (5) nach einem der vorhergehenden Ansprüche, **dadurch gekennzeichnet, dass** der Druckmittelzylinder (22) als einfachwirkender Zylinder ausgebildet ist.

11. Hackfruchterntemaschine (5) nach einem der vorhergehenden Ansprüche, **dadurch gekennzeichnet, dass** alle Sechscheiben (20) der Hackfruchterntemaschine (5) an der wenigstens einen Schwingen (16) gelagert sind.

12. Hackfruchterntemaschine (5) nach einem der vorhergehenden Ansprüche, **dadurch gekennzeichnet, dass** jede Sechscheibe (20) an einer Schwinge (16) aufgenommen ist.

13. Hackfruchterntemaschine (5) nach einem der vorhergehenden Ansprüche, **dadurch gekennzeichnet, dass** sie eine Aufnahmeeinrichtung für die Hackfrüchte aufweist, und dass die Sechscheiben (20) beidseitig der Aufnahmeeinrichtung angeordnet sind.
